# EUROPEAN PATENT APPLICATION

(11) **EP 2 669 108 A1**
(43) Date of publication of application: **04.12.2013**
(21) Application number: 12739967.3
(22) Date of filing: 26.01.2012
(51) Int. Cl.: B60K 17/348

(54) **DRIVE FORCE ALLOCATION CONTROL APPARATUS**

(30) Priority: 26.01.2011 JP 2011013707
(71) Applicant: JTEKT Corporation, Osaka-shi, Osaka 542-8502 (JP)
(72) Inventor: KAKITA, Akiyoshi, Osaka-shi Osaka 542-8502 (JP); OHTA, Toshio, Osaka-shi Osaka 542-8502 (JP); KATO, Kiyoshige, Osaka-shi Osaka 542-8502 (JP); WAKAO, Hisaaki, Osaka-shi Osaka 542-8502 (JP)
(74) Representative: Winter, Brandl, Fürniss, Hübner, Röss, Kaiser, Polte - Partnerschaft
(86) International application number: PCT/JP2012/051591
(87) International publication number: WO 2012/102319

(57) **Abstract**

A driving force distribution control device controls an inductive load circuit to adjust a ratio of driving forces transmitted from a driving source to a plurality of wheels via a driving force transmitting system. The driving force distribution control device counts a number of tests performed by applying a test current to the inductive load circuit; determines that a disconnecting abnormality occurs in an electric load including the inductive load circuit if a difference between a value of the test current and a value of current flowing in the inductive load circuit is greater than a current difference threshold value; and determines that the disconnecting abnormality is definitive if the number of tests is equal to a threshold value or more, and also if the number of determinations of the disconnecting abnormality is equal to a predetermined threshold value or more.

## Description

### Technical Field

The present invention relates to a driving force distribution control device.

### Background Art

A driving force distribution control device of a driving force transmitting device of a four-wheel drive vehicle is exemplified as a driving force distribution control device. The driving force distribution control device is provided with a clutch mechanism and controls electrical conduction of an electromagnetic coil to connect or disconnect the clutch mechanism by controlling an ON or OFF state of a relay.

Further, in a state where the relay is turned on, the driving force distribution control device can cause the electromagnetic coil, which is electrically connected to a power line via the relay, to be excited or degaussed by controlling an ON or OFF state of switch means of a switching element (FET or the like). Also, the clutch mechanism is connected by the excitation of the electromagnetic coil, whereby torque distribution for four-wheel driving is carried out.

In such a driving force distribution control device, when a vehicle is stopped and an ignition switch (IG, power switch) thereof is turned on, detection of a disconnecting failure in the relay, electromagnetic coil, switching element, wiring and the like are carried out for an initial check.

The detection of the disconnecting failure is carried out by applying a test pulse (pulse current value) as a current command value and checking whether or not the feedback current is a predetermined current value, only when the IG is turned on for the first time. In addition, when the state of a vehicle is under a specific state, e.g., a sudden start from a state where the rotation of an engine is increased, when a vehicle is in a state of a four-wheel driving control (4WD control), there is a possibility to cause torque shock. Therefore, a method for reducing the control volume of torque in such a state has been disclosed in Patent Document 1.

### Related Art Documents

### Patent Documents

Patent Document 1: JP-A-2004-017885

### Summary of the Invention

### Problem to be Solved by the Invention

In a normal state, the IG is generally turned on when a vehicle is stopped, as described above. However, depending on how a vehicle is used, it is difficult to predict the state of a vehicle when the IG is turned on. For example, if a strong test pulse for detecting the disconnecting failure is conducted to the electromagnetic coil in the case where the IG is suddenly turned on in a state where a vehicle is on a long downhill road while the steering wheel thereof is turned to the right and the IG is turned off, a slip is caused in the clutch mechanism due to the sudden frictional engagement therebetween. As a result, there is a possibility that torque shock or noise may be generated. In addition, if the test pulse for detecting the disconnecting abnormality is smaller than required, there is a possibility that it may be difficult to detect the disconnecting abnormality accurately.

The present invention has been made in view of the above-described circumstances, and an object thereof is to provide a driving force distribution control device with a comfortable steering feeling that not only securely detects a disconnecting abnormality but also prevents torque shock or noise from being generated when checking the disconnection.

### Means for Solving the Problem

According to a first aspect of the present invention, there is provided a driving force distribution control device which controls an inductive load circuit to adjust a ratio of driving forces transmitted from a driving source to a plurality of wheels via a driving force transmitting system, the driving force distribution control device including: a test current control unit which controls an output of a test current which is equal to a predetermined value or less and is output to the inductive load circuit; a current detection unit which detects a current flowing in the inductive load circuit; a first counter which counts a number of tests performed by applying the test current to the inductive load circuit; a disconnecting abnormality determination unit which determines that a disconnecting abnormality occurs in an electric load including the inductive load circuit if a difference between a value of the test current and a value of the current flowing in the inductive load circuit is greater than a current difference threshold value; a second counter which counts a number of occurrences of the disconnecting abnormality determined by the disconnecting abnormality determination unit; and a disconnecting abnormality detection unit which determines that the disconnecting abnormality is definitive if the number of tests counted by the first counter is equal to a test number threshold value or more, and also if the number of determinations of the disconnecting abnormality counted by the second counter is equal to a disconnecting abnormality determination threshold value or more.

As an embodiment of the present invention, a microcomputer causes the test current to flow to detect the disconnecting abnormality of the electric load including the inductive load circuit. It is counted that the disconnecting abnormality has occurred if the difference between the value of the test current and that of the current flowing in the inductive load circuit is greater than the current difference threshold value, for example. Furthermore, if the count number is counted as the number of occurrences of the disconnecting abnormality in the electric load including the inductive load circuit is equal to the predetermined number of times or more when the number of applications of the test current reaches the predetermined number of times, the disconnecting abnormality is definitive. Then the system is stopped.

According to the configuration described above, it is possible to prevent a possibility of torque shock or noise generated in the electromagnetic clutch mechanism by applying the test current, regardless of the situation of a vehicle. Also, if the difference between the value of the test current and that of the current flowing in the inductive load circuit is greater than the current difference threshold value, it is determined that the disconnecting abnormality has occurred in the electric load including the inductive load circuit. Thereby, it is possible to accurately detect the occurrence of the disconnecting abnormality. Furthermore, if the disconnecting abnormality is counted and the count number of the disconnecting abnormality is equal to the predetermined number of times or more, the disconnecting abnormality is definitive. Thereby, it is possible to more securely determine the disconnecting abnormality.

### Advantages of the Invention

According to the present invention, it is possible to provide a driving force distribution control device with a comfortable steering feeling that not only securely detects a disconnecting abnormality but also prevents torque shock or noise from being generated when checking the disconnection.

### Brief Description of the Drawings

Fig. 1 is a configuration diagram schematically showing a four-wheel drive vehicle according to an embodiment.
Fig. 2 is a block diagram showing an electrical connection of a driving force transmitting device according to the embodiment.
Fig. 3 is a control block diagram of the driving force transmitting device according to the embodiment.
Fig. 4 is an explanatory diagram showing an impression aspect of a test current when detecting a disconnecting abnormality.
Fig. 5 is a flowchart showing a process procedure of detection of disconnecting abnormality.
Fig. 6 is a flowchart showing a process procedure of detection of disconnecting abnormality.

### Mode for Carrying Out the invention

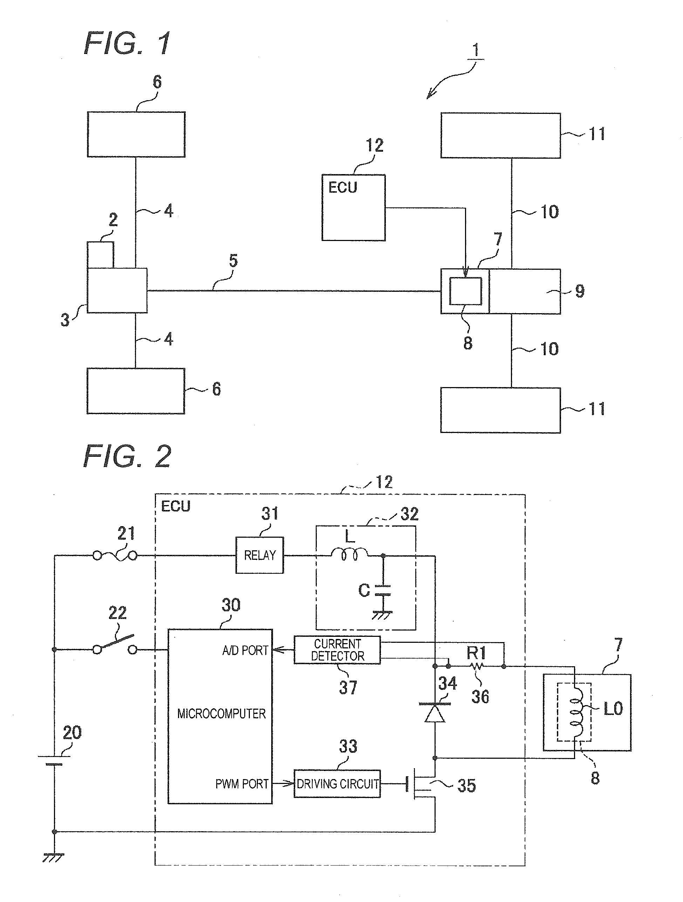

Hereinafter, a first embodiment which embodies the present invention in a driving force distribution device of a four-wheel drive vehicle will be described referring to the drawings.
As shown in Fig. 1, a four-wheel drive vehicle 1 is provided with an engine 2 of an internal combustion engine and a transaxle 3. The transaxle 3 is connected to a pair of front axles 4 and 4 and a propeller shaft 5. Both front axles 4 and 4 are respectively connected to the front wheels 6 and 6. The propeller shaft 5 is connected to a driving force transmitting device (torque coupling) 7, and the torque coupling 7 is connected to a rear differential 9 via a drive pinion shaft (not shown). The rear differential 9 is connected to both of rear wheels 11 and 11 via a pair of rear axles 10 and 10.

A driving force of the engine 2 is transmitted to both front wheels 6 and 6 via the transaxle 3 and both front axles 4 and 4. In addition, when the propeller shaft 5 is connected to the drive pinion shaft at the torque coupling 7 such that torque can be transmitted, the driving force of the engine 2 is transmitted to both rear wheels 11 and 11 via the propeller shaft 5, the drive pinion shaft, the rear differential 9 and both rear axles 10 and 10. Furthermore, the driving force of the engine 2 supplies power to a battery 20 (see Fig. 2) by rotating a generator (not shown).

The torque coupling 7 is provided with a wet multi-plate type electromagnetic clutch mechanism 8. The electromagnetic clutch mechanism 8 has a plurality of clutch plates (not shown) which are frictionally engaged with or separated from each other. Further, the electromagnetic clutch mechanism 8 is equipped with an electromagnetic coil L0 (see Fig. 2) as an inductive load circuit. When a driving force distribution control device (ECU) 12 as an inductive load circuit control unit makes a current corresponding to a current command value generated in the ECU 12 supplied to the electromagnetic coil L0, the clutch plates are frictionally engaged with each other. Thereby, the torque is transmitted to the rear wheel 11, and therefore, a 4WD control is performed. When the ECU 12 prevents the current corresponding to the current command value from being supplied to the electromagnetic coil L0, the clutch plates are separated from each other. Thereby, the torque is prevented from being transmitted to the rear wheel 11, and therefore, a front-wheel drive is performed (2WD control).

A frictional engagement force of each of the clutch plates is increased or decreased corresponding to the amount of the current (intensity of the current) which is supplied to the electromagnetic coil L0 of the electromagnetic clutch mechanism 8 and corresponds to the current command value. Therefore, it is possible to arbitrarily adjust a transmitting torque to the rear wheel 11, namely a restraining force to the rear wheel 11 (frictional engagement force of the electromagnetic clutch mechanism 8). As a result, the ECU 12 selects either the 4WD control or the 2WD control, and also, controls a driving force distribution ratio (torque distribution ratio) between the front and rear wheels 6 and 11 during the 4WD control state.

Next, an electrical configuration of the ECU 12 controlling the electromagnetic coil L0 will be described referring to Fig. 2. The ECU 12 is mainly constituted of including a microcomputer 30 provided with a CPU (not shown), a RAM (not shown), a ROM (not shown), an I/O interface (not shown) and the like. Various control programs executed by the ECU 12, various data, various maps and the like are stored in the ROM. The maps are obtained in advance based on experimental data by a vehicle model, known theoretical calculations and the like. The RAM is a data working area in which a control program such as a disconnecting abnormality detection program stored in the ROM is expanded and the CPU executes various arithmetic processing.

A plurality of vehicle speed sensors (not shown) and a throttle position sensor (not shown) aside from an ignition switch (IG) 22 are connected to an input side (input terminal of the I/O interface) of the ECU 12. The torque coupling 7 and an engine control device (not shown) are connected to an output side (output terminal of the I/O interface) of the ECU 12.

The vehicle speed sensors are respectively provided in each of the wheels 6 and 11. Each of the vehicle speed sensors detects a rotational speed (hereinafter, referred to as wheel speed) of the wheels 6 and 11 corresponding thereto. The throttle position sensor is connected to a throttle valve (not shown) and detects an opening degree of the throttle valve, namely a stepping operation amount of an accelerator pedal (not shown) by a driver. Then, based on a detection signal from each of the sensors, the microcomputer 30 of the ECU 12 determines whether or not a traveling state of a vehicle is in a steady traveling state, and also, calculates a regular current command value (Irr*).

As shown in Fig. 2, a series circuit is connected to the battery 20. The series circuit is configured of connecting a fuse 21, a relay 31, a coil L of a noise removal filter 32, a current detection resistor (R1) 36 for detecting the current flowing in the electromagnetic coil L0, the electromagnetic coil L0 and a switching element (for example, FET) 35 in series. One end of a capacitor C is connected to a connecting point between the coil L and the current detection resistor 36. Also, the other end of the capacitor C is connected to ground. The capacitor C and the coil L constitute the noise removal filter 32. In addition, a flywheel diode 34 is connected to a negative terminal of the electromagnetic coil L0.

The IG 22 as a power switch causes the power of the battery 20 to be supplied to the microcomputer 30. When the IG 22 is turned on to supply the power, the microcomputer 30 processes various control programs. In addition, both ends of the current detection resistor 36 are connected to an input side of a current detector 37, and an output side of the current detector 37 is connected to an A/D port of the microcomputer 30. Thereby, it is possible for the microcomputer 30 to detect an actual current value (Ir) flowing in the electromagnetic coil L0.

A PWM port of the microcomputer 30 is connected to a driving circuit 33. The driving circuit 33 performs an ON/OFF control (PWM control) of the FET 35 based on a PWM signal which is output from the PWM port and is used for controlling the amount of the current supplied to the electromagnetic coil L0 of the electromagnetic clutch mechanism 8 corresponding to the current command value. As a result, the amount of the current supplied to the electromagnetic coil L0 of the electromagnetic clutch mechanism 8 corresponding to the current command value is controlled, whereby the driving force distribution between the front wheel side and the rear wheel side is variably controlled.

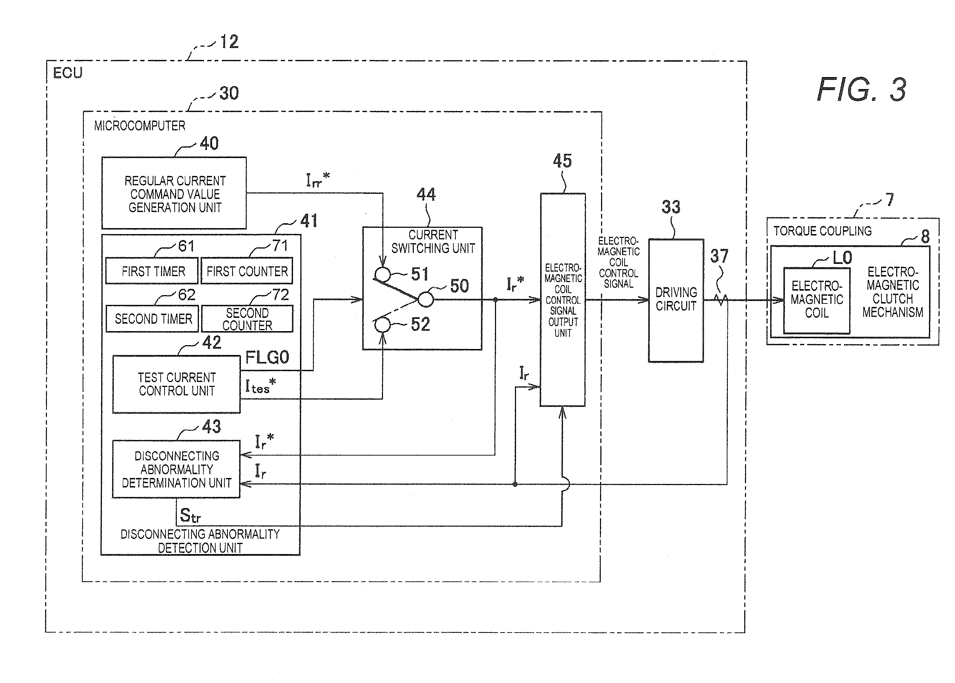

Subsequently, a control configuration of the microcomputer 30 will be described referring to Fig. 3. As shown in Fig. 3, the ECU 12 is provided with the microcomputer 30 which outputs an electromagnetic coil control signal and the driving circuit 33 which supplies a drive power to the electromagnetic coil L0, namely a driving source of the torque coupling 7, based on the electromagnetic coil control signal. Furthermore, the ECU 12 is provided with the current detector 37 to detect the actual current value Ir flowing in the electromagnetic coil L0.

In more detail, the microcomputer 30 of the embodiment is provided with a regular current command value generation unit 40 to calculate the regular current command value Irr* to be applied to the electromagnetic coil L0, a disconnecting abnormality detection unit 41 to detect the disconnecting abnormality of the electric load including the electromagnetic coil L0, and a current switching unit 44 to switch the current. The microcomputer 30 is additionally provided with an electromagnetic coil control signal output unit 45 to output the electromagnetic coil control signal based on a current command value Ir* output from the current switching unit 44.

The disconnecting abnormality detection unit 41 is provided with a test current control unit 42 to control the output of a test current for detecting the disconnecting abnormality and a disconnecting abnormality determination unit 43 to determine the disconnecting abnormality. A current switching flag FLGO and a test current value Ites* are output from the test current control unit 42 to the current switching unit 44. In addition, the current command value Ir* output from the current switching unit 44 and the actual current value Ir detected by the current detector 37 are input to the disconnecting abnormality determination unit 43. Furthermore, a disconnecting abnormality decision signal Str is output from the disconnecting abnormality determination unit 43 to the electromagnetic coil control signal output unit 45. The disconnecting abnormality detection unit 41 is additionally provided with a first timer 61, a second timer 62, a first counter 71 and a second counter 72. The first timer 61 is a timer for detecting the current command value Ir* in order to determine the timing for taking the current command value Ir* into the disconnecting abnormality determination unit 43. The second timer 62 is a timer for detecting the actual current value Ir in order to determine the timing for taking the actual current value Ir into the disconnecting abnormality determination unit 32. The first counter 71 is a test counter configured to count the number of tests performed by applying the test current Ites* to the electromagnetic coil L0. The second counter 72 is a disconnecting abnormality decision counter configured to count the number of times that the disconnecting abnormality determination unit 43 determines that the disconnecting abnormality occurs.

The current command value Ir* and the actual current value Ir of the electromagnetic coil L0 detected by the current detector 37 are input to the electromagnetic coil control signal output unit 45. In addition, the electromagnetic coil control signal output unit 45 of the embodiment generates the electromagnetic coil control signal by a current feedback control which causes the actual current value Ir to follow the current command value Ir*.

In the ECU 12 of the embodiment, the microcomputer 30 outputs the electromagnetic coil control signal generated in such a way to the driving circuit 33, and also, the driving circuit 33 supplies the driving force based on the electromagnetic coil control signal to the electromagnetic coil L0. In this way, the ECU 12 controls an operation of the electromagnetic clutch mechanism 8. Thereby, a coupling force of the torque coupling 7 is controlled.

More specifically, in the embodiment, the detection of the disconnecting abnormality is executed only in a first processing routine at the first time of turning on the IG 22 which has been turned off. The current flag FLGO output from the test current control unit 42 shows whether or not the routine is the first processing routine at the first time of turning on the IG 22 which has been turned off. Also the test current value Ites* is a trigger signal to detect the disconnecting abnormality. When executing the detection of the disconnecting abnormality, the test current control unit 42 outputs, to the current switching unit 44, the current switching flag FLGO showing that the routine is the first processing routine at the first time of turning on the IG 22 which has been turned off, and the test current value Ites*.

Next, the current switching unit 44 reads a state of the current switching flag FLGO. Then, if the current switching flag FLGO shows that the routine is the first processing routine at the first time of turning on the IG 22 which has been turned off, the current switching unit 44 connects a node 50 to a node 52. In this case, the test current value Ites* is set as the current command value Ir* and input to the electromagnetic coil control signal output unit 45. In the electromagnetic coil control signal output unit 45, the electromagnetic coil control signal is generated by the current feedback control described above. The electromagnetic coil control signal is output to the electromagnetic coil L0 passing through the driving circuit 33 and the current detector 37. Thereby, the torque coupling 7 is operated.

The current command value Ir* and the actual current value Ir are input to the disconnecting abnormality determination unit 43. Then, if the value obtained by subtracting the actual current value Ir from the current command value Ir* is equal to a predetermined threshold value or more, it is determined that the disconnecting abnormality has occurred. On the other hand, if the value obtained by subtracting the actual current value Ir from the current command value Ir* is smaller than the predetermined threshold value, it is determined that the disconnecting abnormality does not occur. The second counter 72 of the disconnecting abnormality detection unit 41 counts the number of times (disconnecting abnormality count value) that the disconnecting abnormality determination unit 43 determines that the disconnecting abnormality occurs.

The disconnecting abnormality detection unit 41 outputs the test current value Ites* from the test current control unit 42 for a predetermined times (for example, ns times). Then, if the disconnecting abnormality count value described above is equal to a threshold value or more, the disconnecting abnormality detection unit 41 decides that the disconnecting abnormality has occurred. Then, the disconnecting abnormality detection unit 41 carries out the disconnecting abnormality decision process, and inverts the state of the current switching flag FLGO.

In contrast, if the disconnecting abnormality is not determined to be definitive, the current switching unit 44 connects the node 50 to a node 51. If the node 50 is connected to the node 51, the regular current command value Irr* generated in the regular current command value generation unit 40 is set as the current command value Ir* and input to the electromagnetic coil control signal output unit 45. Thereby, the torque coupling 7 is operated, and therefore, the 4WD control in which the driving force is distributed between main driving wheels and coupled driving wheels or the 2WD control in which only the main driving wheels are driven is executed corresponding to the intensity of the current command value Ir*.

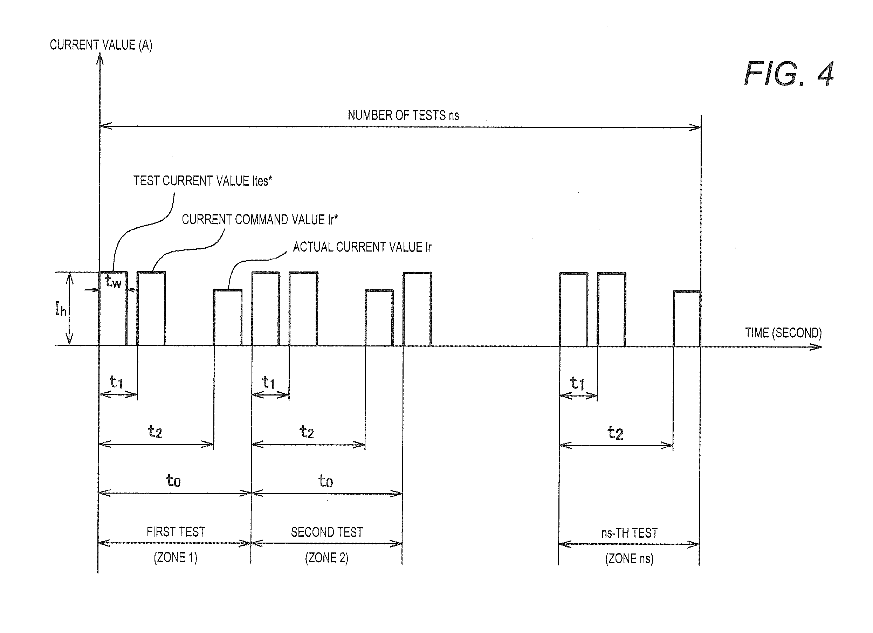

Next, the timing when detecting the disconnecting abnormality of the disconnecting abnormality detection unit 41 will be described referring to Fig. 4. Fig. 4 is an explanatory diagram showing an impression aspect of the test current when detecting the disconnecting abnormality.

As shown in Fig. 4, the test current value Ites* which is Ih(A) in height and is tw(sec) in width. If the extent of the pulse current is too great, it is likely to generate torque shock or noise depending on the vehicle situation. Therefore, it is preferable to set the pulse current as small as possible. In addition, if the extent of the pulse current is too small, it is difficult to detect the actual current value Ir to determine the disconnecting abnormality. Therefore, the appropriate value is selected after repeatedly conducting the experiment.

In the first processing routine at the first time of turning on the IG 22 which has been turned off, a period from the 1st output of the test current value (first test current value) Ites* to the 2nd output of the test current value (second test current value) Ites* is designated as zone 1, and also, represents the first time of the number of tests. The disconnecting abnormality detection unit 41 outputs the first test current value Ites* to the current switching unit 44 and takes in the value of the current command value Ir* after t1 seconds. Specifically, when the first test current value Ites* is output, the first timer 61 set to t1 seconds is started. Then, when the time is up, the current command value Ir* is taken in. Subsequently, the first test current value Ites* is output to the current switching unit 44 and then the value of the actual current value Ir is taken in after t2 seconds. Specifically, when the first test current value Ites* is output, the second timer 62 set to t2 seconds is started. Then, when the time is up, the actual current value Ir is taken in. Next, the disconnecting abnormality detection unit 41 compares the current command value Ir* with the actual current value Ir and detects whether or not the disconnecting abnormality has occurred. In the second and in the following tests, the test is repeatedly carried out at the same sampling of the first time of the test. The test is repeated ns times.

Generally, the detection of the disconnecting abnormality is carried out when a vehicle is stopped. In this case, even if the current conducted to the electromagnetic coil L0 has a broad pulse width, torque shock or noise is not generated.
However, if a large test current value to detect the disconnecting abnormality is conducted to the electromagnetic coil L0 in the case where the IG 22 is suddenly turned on in a state where a vehicle is on a long downhill road while the steering wheel thereof is turned to the right and the IG 22 is turned off, for example, a slip is caused in the clutch plates of the electromagnetic clutch mechanism 8 due to the sudden frictional engagement therebetween. Thereby, torque shock or noise is generated.

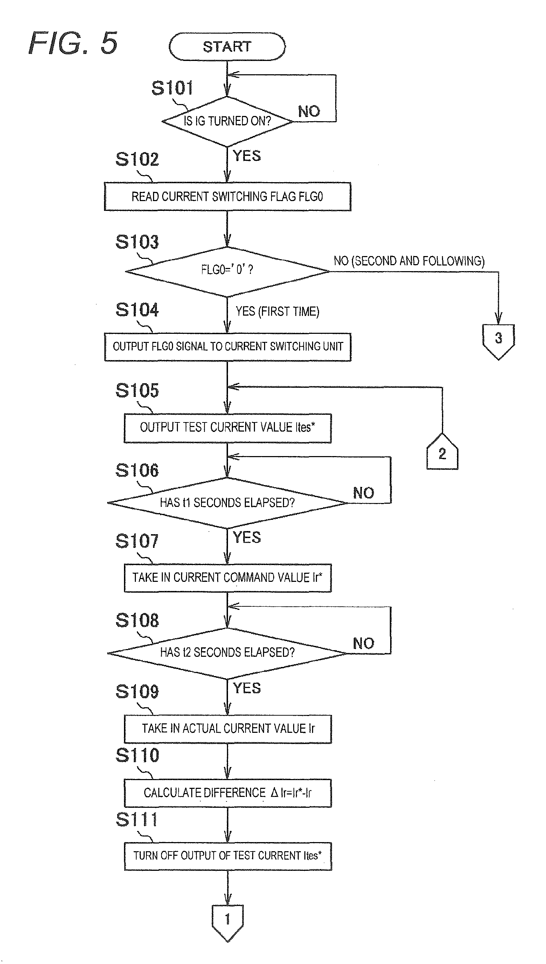

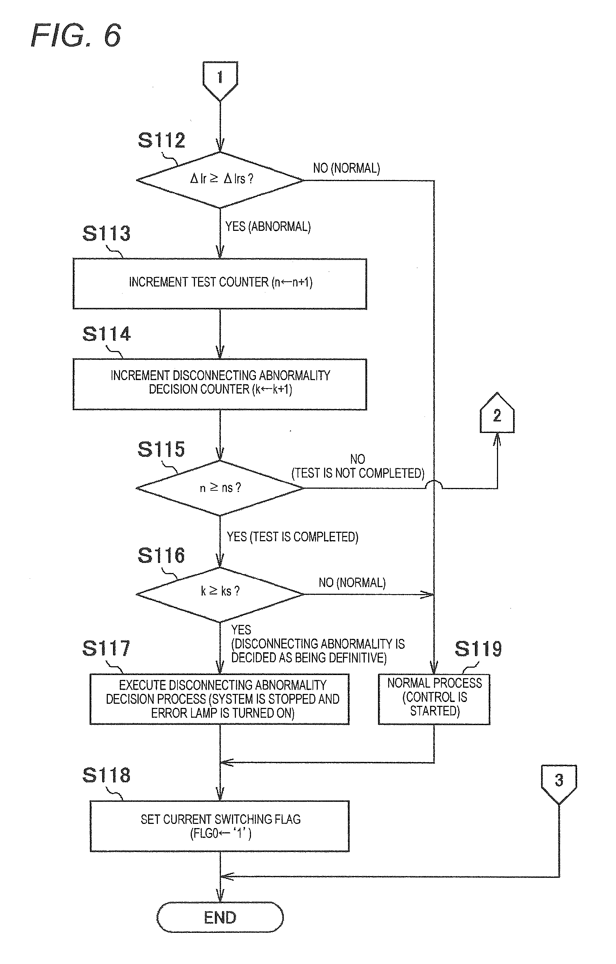

Next, a method for detecting the disconnecting abnormality will be described in detail, referring to the flowcharts shown in Figs. 5 and 6.
First, the microcomputer 30 determines whether or not the IG 22 is turned on (step 101). Then, if the IG 22 is turned off (step 101: NO), this process is repeated until the IG 22 is turned on. Further, if the IG 22 is turned on (step 101: YES), the process proceeds to step 102, and the state of the current switching flag FLGO is read out from the memory.

Subsequently, the microcomputer 30 determines whether or not the current switching flag FLGO is '0' (step 103). Then, if the current switching flag FLGO is '0' (step 103: YES), the process proceeds to step 104, and the current switching flag FLGO is output to the current switching unit 44. Next, the process proceeds to step 105, and the test current value Ites* is output. Then, the process proceeds to step 106 and waits until the time of the first timer 61 is up (t1 seconds elapsed).

Next, if the time of the first timer 61 is up (step 106: YES), the microcomputer 30 proceeds to step 107 and takes in the current command value Ir*. Then, the process proceeds to step 108 and waits until the time of the second timer 62 is up (t2 seconds elapsed).

Subsequently, if the time of the second timer 62 is up (step 108: YES), the microcomputer 30 proceeds to step 109 and takes in the actual current value Ir. Then, the process proceeds to step 110 and obtains the current difference ΔIr by subtracting the actual current value Ir from the current command value Ir*. Next, the process proceeds to step 111 and turns off the output of the test current value Ites*.

Subsequently, the microcomputer 30 determines whether or not the current difference ΔIr is equal to the current difference threshold value ΔIrs or more (step 112). Then, if the current difference ΔIr is equal to the current difference threshold value ΔIrs or more (ΔIr≥ΔIrs, step 112: YES), the process proceeds to step 113 and increments the test counter n (n=n+1, step 113).

Next, the microcomputer 30 proceeds to step 114 and increments a disconnecting abnormality decision count value k of the second counter 72 (k=k+1, step 114). Then, the process proceeds to step 115, and it is determined whether or not the test counter value n of the first counter 71 is equal to the test counter threshold value ns or more (step 115). Further, if the test counter value n is equal to the test counter threshold value ns or more (n≥ns, step 115: YES), the process proceeds to step 116.

Subsequently, in step 116, the microcomputer 30 determines whether or not the disconnecting abnormality decision count value k is equal to the disconnecting abnormality decision counter threshold value ks or more (step 116). Then, if the disconnecting abnormality decision count value k is equal to the disconnecting abnormality decision counter threshold value ks or more (k≥ks, step 116: YES), the process proceeds to step 117 and carries out the disconnecting abnormality decision process (system stop, error lamp ON, or the like). Next, the process proceeds to step 118 and sets the current switching flag FLGO to '1'. Then, this process is finished.

Subsequently, in step 116, if the disconnecting abnormality decision count value k is smaller than the disconnecting abnormality decision counter threshold value ks (k<ks, step 116: NO), the microcomputer 30 proceeds to step 119 and carries out the normal process (control is started). Then, the process proceeds to step 118.

In addition, in step 115, if the test counter value n is smaller than the test counter threshold value ns (n<ns, step 115: NO), the microcomputer 30 proceeds to step 105 and repeats steps 106 to 115. Further, in step 103, if the current switching flag FLGO is not '0' (step 103: NO), this process is finished without executing steps 104 to 118.

According to the embodiment, it is possible to obtain the functions and effects described below.
When a vehicle is stopped, for example, the microcomputer 30 makes the test current flow to detect the disconnecting abnormality of the electric load including the inductive load circuit. It is preferable to set the pulse current value of which the strength is small enough not to cause torque shock or noise to be generated in an electromagnetic clutch mechanism unit, as the value of the test current. Also, it is counted that the disconnecting abnormality has occurred if the difference between the value of the test current and that of the current flowing in the inductive load circuit is greater than the current difference threshold value. Furthermore, if the count number counted as the number of occurrences of the disconnecting abnormality in the inductive load circuit is equal to the predetermined number of times or more when the number of applications of the test current reaches the predetermined number of times, the disconnecting abnormality is decided as being definitive, and the system is stopped.

According to the configuration described above, it is possible to prevent a possibility of torque shock or noise generated in the electromagnetic clutch mechanism unit by applying the test current, regardless of the situation of a vehicle. Also, if the difference between the value of the test current and that of the current flowing in the inductive load circuit is greater than the current difference threshold value, it is determined that the disconnecting abnormality has occurred in the electric load including the inductive load circuit. Thereby, it is possible to accurately detect the occurrence of the disconnecting abnormality. Furthermore, if the disconnecting abnormality is counted and the count number of the disconnecting abnormality is equal to the predetermined number of times or more, the disconnecting abnormality is decided as being definitive. Thereby, it is possible to more securely determine the disconnecting abnormality.

Further, the embodiment may be changed as follows.
(A) In the embodiment, the present invention is embodied in the driving force distribution device of a vehicle in which the front wheels function as main driving wheels. However, without being limited thereto, the present invention may be embodied in the driving force distribution device of a vehicle in which the rear wheels function as main driving wheels.

(B) In the embodiment, the present invention is embodied in the driving force distribution device. However, without being limited thereto, the present invention may be embodied in other devices such as an electric power steering device, for example.

(C) In the embodiment, the pulse current is used as the test current of the present invention. However, without being limited thereto, an exponential current or saw-tooth wave current may be used as the test current of the present invention.

### Description of Reference Signs

1: Four-Wheel Drive Vehicle
2: Engine
3: Transaxle
4: Front Axle
5: Propeller Shaft
6: Front Wheel
7: Driving Force Transmitting Device (Torque Coupling)
8: Electromagnetic Clutch Mechanism
9: Rear Differential
10: Rear Axle
11: Rear Wheel
12: Driving Force Distribution Control Device (ECU)
20: Battery
21: Fuse
22: Ignition Switch (IG)
30: Microcomputer
31: Relay
32: Noise Removal Filter
33: Driving Circuit
34: Flywheel Diode
35: Switching Element
36: Current Detection Resistor (R1)
37: Current Detector
40: Regular Current Command Value Generation Unit
41: Disconnecting Abnormality Detection Unit
42: Test Current Control Unit
43: Disconnecting Abnormality Determination Unit
44: Current Switching Unit
45: Electromagnetic Coil Control Signal Output Unit
50, 51, 52: Node
61: First Timer
62: Second Timer
71: First Counter
72: Second Counter
L0: Electromagnetic Coil
Irr*: Regular Current Command Value
Ir*: Current Command Value
Ir: Actual Current Value
Ites*: Test Current Value
ΔIr: Current Difference
ΔIrs: Current Difference Threshold Value
t1: Timer Setting Time for Detecting Current Command Value Ir*
t2: Timer Setting Time for Detecting Actual Current Value Ir
n: Test Count Value
ns: Test Counter Threshold Value
k: Disconnecting Abnormality Decision Count Value
ks: Disconnecting Abnormality Decision Threshold Value
FLGO: Current Switching Flag
Str: Disconnecting Abnormality Decision Signal

## Claims

1. A driving force distribution control device which controls an inductive load circuit to adjust a ratio of driving forces transmitted from a driving source to a plurality of wheels via a driving force transmitting system, said driving force distribution control device comprising:
a test current control unit which controls an output of a test current which is equal to a predetermined value or less and is output to the inductive load circuit;
a current detection unit which detects a current flowing in the inductive load circuit;
a first counter which counts a number of tests performed by applying the test current to the inductive load circuit;
a disconnecting abnormality determination unit which determines that a disconnecting abnormality occurs in an electric load comprising the inductive load circuit if a difference between a value of the test current and a value of the current flowing in the inductive load circuit is greater than a current difference threshold value;
a second counter which counts a number of times that the disconnecting abnormality determination unit determines that the disconnecting abnormality occurs; and
a disconnecting abnormality detection unit which determines that the disconnecting abnormality is definitive if the number of tests counted by the first counter is equal to a test number threshold value or more, and also if the number of determinations of the disconnecting abnormality counted by the second counter is equal to a disconnecting abnormality determination threshold value or more.
